# EUROPÄISCHE PATENTSCHRIFT

(11) **EP 2 795 094 B1**
(45) Veröffentlichungstag und Bekanntmachung des Hinweises auf die Patenterteilung: **09.11.2016**
(21) Anmeldenummer: 12815677.5
(22) Anmeldetag: 20.12.2012
(51) Int. Cl.: F02M 55/00, F02M 37/00, F02M 59/10, F16L 27/12, F16L 41/08, F04B 1/04, F16L 51/02

(54) **PUMPE, INSBESONDERE KRAFTSTOFFHOCHDRUCKPUMPE FÜR EINE KRAFTSTOFFEINSPRITZEINRICHTUNG**
PUMP, IN PARTICULAR HIGH-PRESSURE FUEL PUMP FOR A FUEL INJECTION DEVICE
POMPE, EN PARTICULIER POMPE HAUTE PRESSION CARBURANT POUR UN DISPOSITIF D'INJECTION DE CARBURANT

(30) Priorität: 21.12.2011 DE 102011089409
(43) Veröffentlichungstag der Anmeldung: 29.10.2014
(73) Patentinhaber: Robert Bosch GmbH, 70442 Stuttgart (DE)
(72) Erfinder: LUCARELLI, Francesco, 70469 Stuttgart (DE); KOENIG, Thomas, 71254 Ditzingen (DE)
(86) Internationale Anmeldenummer: PCT/EP2012/076387
(87) Internationale Veröffentlichungsnummer: WO 2013/092865

(56) Entgegenhaltungen:
- WO-A1-2008/129001
- AT-U1- 4 632
- DE-A1-102004 036 626
- US-A- 3 409 224

## Beschreibung

### Stand der Technik

Die Erfindung geht aus von einer Pumpe, insbesondere Kraftstoffhochdruckpumpe für eine Kraftstoffeinspritzeinrichtung, nach der Gattung des Anspruchs 1.

Eine solche Pumpe in Form einer Kraftstoffhochdruckpumpe ist durch die DE 10 2009 026 964 A1 bekannt. Diese Pumpe weist ein Gehäuse auf, an dem ein Anschlussstutzen für einen Kraftstoffzulauf und ein Anschlussstutzen für einen Kraftstoffrücklauf angeordnet ist. Über den Kraftstoffzulauf wird der Pumpe Kraftstoff zugeführt, der durch die Pumpe gefördert wird und/oder zur Schmierung eines Antriebsbereichs der Pumpe dient. Über den Kraftstoffrücklauf wird Kraftstoff von der Pumpe abgeführt, der beispielsweise zur Schmierung und/oder Kühlung des Antriebsbereichs dient und der beispielsweise zu einem Kraftstoffvorratsbehälter abgeführt wird. Die Anschlussstutzen weisen eine bestimmte Anschlussgeometrie auf, die auf die jeweilige Kraftstoffleitung abgestimmt ist. Außerdem müssen die Anschlussstutzen eine vorgegebene Länge und Ausrichtung aufweisen um den Kraftstoffzulauf und -rücklauf anschließen zu können, deren Lage durch die Brennkraftmaschine und deren Einbausituation vorgegeben ist, für die die Kraftstoffeinspritzeinrichtung vorgesehen ist. Für unterschiedliche Brennkraftmaschinen können sich unterschiedliche Erfordernisse hinsichtlich Länge und Ausrichtung der Anschlussstutzen ergeben, wobei dann für jede Brennkraftmaschine individuell unterschiedlich ausgebildete Anschlussstutzen erforderlich sind. Dies führt zu einem großen Fertigungsaufwand der Pumpe, da entsprechend eine Vielzahl unterschiedlicher Anschlussstutzen bereitgehalten werden müssen und die Verwendung der passenden Anschlussstutzen für den jeweiligen Einsatz der Pumpe sichergestellt werden muss.

Durch die WO 2008/129001 A1 ist ebenfalls eine Pumpe bekannt, bei der an einem Gehäuse ein Anschlussstutzen für eine hydraulische Leitung angeordnet ist. Es sind dabei verschiedene Varianten des Anschlussstutzens vorgesehen, bei denen dieser gerade orientiert ist oder mehr oder weniger stark abgewinkelt. Für jede Variante des Anschlussstutzens ist dabei ein gesondertes Werkzeug zu dessen Herstellung erforderlich, so das auch hier ein großer Fertigungsaufwand der Pumpe erforderlich ist und entsprechend eine Vielzahl unterschiedlicher Anschlussstutzen bereitgehalten werden müssen und die Verwendung der passenden Anschlussstutzen für den jeweiligen Einsatz der Pumpe sichergestellt werden muss.

Durch die DE 10 2004 036626 A1 und die AT 4 632 U1 ist es bekannt in den Verbindungen zwischen einer gemeinsamen Kraftstoffzuleitung und mehreren an dieser angeschlossenen Einspritzeinrichtungen jeweils ein Verbindungselement vorzusehen, das einen faltenbalgartig ausgebildeten Bereich aufweist, wodurch toleranzbedingte Form- und Lageabweichungen zwischen der Kraftstoffzuleitung und den Einspritzeinrichtungen ausgeglichen werden können.

Durch die US 3 409 224 A ist ein Trinkhalm bekannt, der einen faltenbalgartigen Bereich aufweist, durch den ein Biegen des Trinkhalms ermöglicht ist ohne dass dieser knickt und somit unbrauchbar wird.

### Offenbarung der Erfindung

### Vorteile der Erfindung

Die erfindungsgemäße Pumpe mit den Merkmalen gemäß Anspruch 1 hat demgegenüber den Vorteil, dass der Fertigungsaufwand verringert ist, da beim Einsatz der Pumpe in unterschiedlichen Anwendungen dieselben Anschlussstutzen verwendet werden können, die nach dem Einsetzen in die Aufnahme des Pumpengehäuses an die unterschiedlichen Erfordernisse hinsichtlich Länge und Ausrichtung angepasst werden können.

In den abhängigen Ansprüchen sind vorteilhafte Ausgestaltungen und Weiterbildungen der erfindungsgemäßen Pumpe angegeben. Die Ausbildung gemäß Anspruch 2 hat den Vorteil, dass die Richtung, in der der freie Endbereich des Anschlussstutzens, an dem die Zu- und/oder Rückleitung angeschlossen wird, beliebig ausgerichtet werden kann. Durch die Ausbildung gemäß Anspruch 3 ist eine von der Lage der Aufnahme des Anschlussstutzens am Pumpengehäuse abweichende Ausrichtung des freien Endbereichs des Anschlussstutzens ermöglicht. Durch die Ausbildung gemäß Anspruch 4 ist ein seitlicher Versatz zwischen der Lage der Aufnahme des Anschlussstutzens am Pumpengehäuse und dem freien Endbereich des Anschlussstutzens ermöglicht.

### Zeichnung

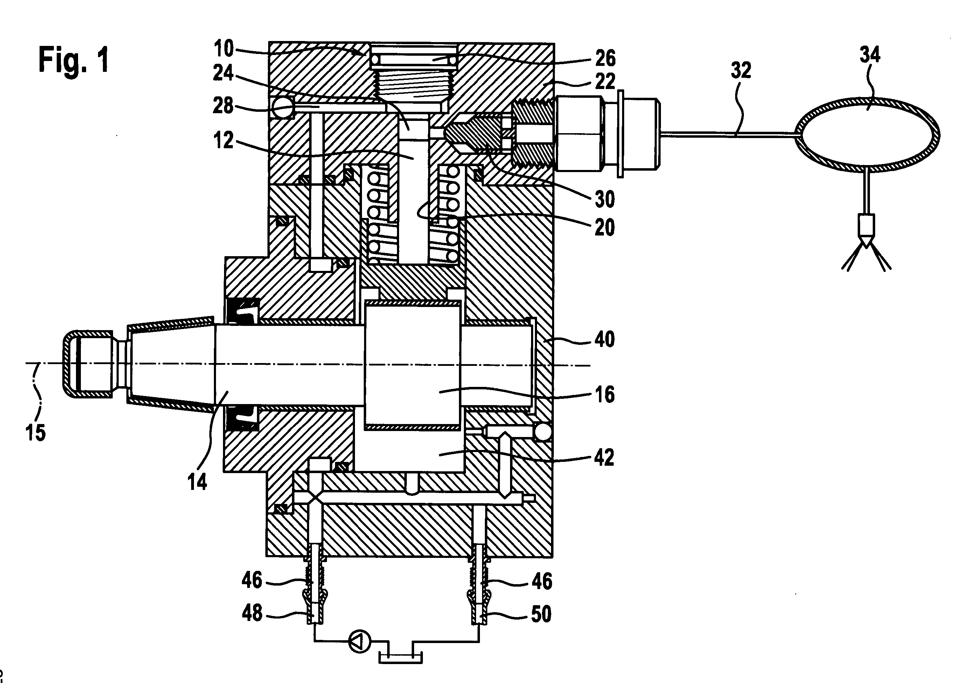

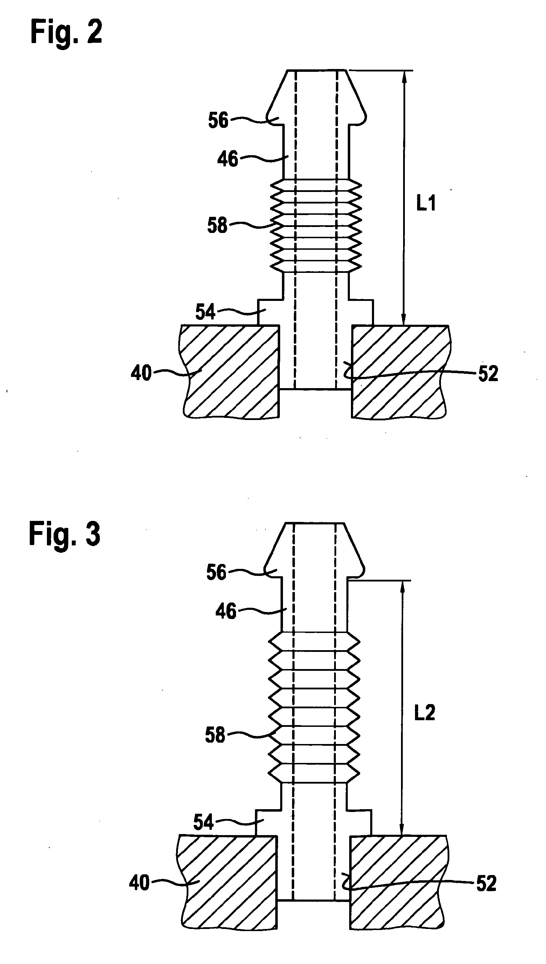

Ein Ausführungsbeispiel der Erfindung ist in der Zeichnung dargestellt und in der nachfolgenden Beschreibung näher erläutert. Es zeigen Figur 1 eine Pumpe in vereinfachter Darstellung mit wenigstens einem Anschlussstutzen und die Figuren 2 bis 5 Anschlussstutzen in verschiedenen Längen und/oder Ausrichtungen.

### Beschreibung des Ausführungsbeispiels

In Figur 1 ist eine Pumpe dargestellt, die insbesondere eine Kraftstoffhochdruckpumpe für eine Kraftstoffeinspritzeinrichtung einer Brennkraftmaschine ist. Die Pumpe weist wenigstens ein Pumpenelement 10 auf, das wiederum einen Pumpenkolben 12 aufweist, der zumindest mittelbar durch eine Antriebswelle 14 in einer Hubbewegung in zumindest annähernd radialer Richtung bezüglich der Drehachse 15 der Antriebswelle 14 angetrieben wird. Die Antriebswelle 14 kann Teil der Pumpe sein oder alternativ kann auch vorgesehen sein, dass die Pumpe keine eigene Antriebswelle aufweist und die Antriebswelle 14 Teil der Brennkraftmaschine ist. Die Antriebswelle 14 kann dabei beispielsweise eine Welle der Brennkraftmaschine sein durch die auch die Gaswechselventile der Brennkraftmaschine betätigt werden. Die Antriebswelle 14 kann für den Antrieb des Pumpenkolbens 12 einen Nocken 16 oder Exzenter aufweisen.

Die Pumpe weist ein Pumpengehäuse auf, das mehrteilig ausgebildet sein kann. Der Pumpenkolben 12 ist in einer Zylinderbohrung 20 eines ersten Gehäuseteils 22 der Pumpe dicht geführt wobei das erste Gehäuseteil 22 nachfolgend als Zylinderkopf bezeichnet wird. Mit seinem der Antriebswelle 14 abgewandten Ende begrenzt der Pumpenkolben 12 in der Zylinderbohrung 20 einen Pumpenarbeitsraum 24. Der Pumpenarbeitsraum 24 weist über ein Einlassventil 26, das beispielsweise ein in den Pumpenarbeitsraum 24 hinein öffnendes Einlassrückschlagventil ist, eine Verbindung mit einem beispielsweise von einer Förderpumpe herführenden Zulauf 28 auf, über den der Pumpenarbeitsraum 24 beim radial nach innen zur Drehachse 15 der Antriebswelle 14 gerichteten Saughub des Pumpenkolbens 12 mit Kraftstoff befüllt wird. Der Pumpenarbeitsraum 24 weist außerdem über ein Auslassventil 30, das beispielsweise ein aus dem Pumpenarbeitsraum 24 heraus öffnendes Auslassrückschlagventil ist, eine Verbindung mit einem Ablauf 32 auf, der beispielsweise zu einem Kraftstoffhochdruckspeicher 34 führt und über den beim radial nach außen von der Drehachse 15 der Antriebswelle 14 weg gerichteten Förderhub des Pumpenkolbens 12 Kraftstoff aus dem Pumpenarbeitsraum 24 verdrängt wird.

Der Zylinderkopf 22 ist mit einem Gehäuseteil 40 verbunden, das einen Innenraum 42 aufweist, in dem die Antriebswelle 14 angeordnet ist. Am Gehäuseteil 40 ist wenigstens ein Anschlussstutzen 46 vorgesehen, an den eine Kraftstoffzuleitung 48 oder eine Kraftstoffrückleitung 50 für die Pumpe angeschlossen werden kann. Es können auch mehrere Anschlussstutzen 46 am Gehäuseteil 40 vorgesehen sein. Es kann vorgesehen sein, dass über die Kraftstoffzuleitung 48 und den zugehörigen Anschlussstutzen 46 Kraftstoff in den Innenraum 42 zugeführt wird, um dort eine Schmierung und/oder Kühlung des Antriebsbereichs der Pumpe sicherzustellen. Über die Kraftstoffrückleitung 50 kann Kraftstoff aus dem Innenraum 42 beispielsweise zu einem Kraftstoffvorratsbehälter abgeführt werden.

Nachfolgend wird mit Bezug zu den Figuren 2 bis 5 der Anschlussstutzen 46 näher beschrieben. In Figur 2 ist der Anschlussstutzen 46 in einem Ausgangszustand dargestellt. Der Anschlussstutzen 46 weist eine zylindrische Grundform auf und dessen einer Endbereich ist in eine Aufnahme, beispielsweise eine Bohrung 52, im Gehäuseteil 40 eingesetzt, beispielsweise eingeschraubt oder eingepresst. Am Anschlussstutzen 46 kann ein außerhalb der Aufnahme 52 angeordneter Ringbund 54 vorgesehen sein, der an der Außenseite des Gehäuseteils 40 zur Anlage kommt und dadurch die Endposition des Anschlussstutzens 46 in der Aufnahme 52 bestimmt. An seinem der Aufnahme 52 entgegengesetzten Endbereich weist der Anschlussstutzen 46 eine Verdickung 56 auf, die sich zum Ende des Anschlussstutzens 46 hin verjüngt, beispielsweise annähernd konisch verjüngt. Die Verdickung 56 dient zum Überstülpen der Kraftstoffleitung 48 bzw. 50, die durch die Verdickung 56 gehalten und abgedichtet wird. Die Verdickung 56 kann unterschiedlich ausgebildet sein angepasst an die jeweilige Kraftstoffleitung und anstelle der Verdickung 56 kann auch eine andere Anschlussgeometrie für die Kraftstoffleitung vorgesehen sein. In einem mittleren Bereich 58 seiner Längserstreckung zwischen seinen Endbereichen ist der Anschlussstutzen 46 bleibend verformbar ausgebildet, wobei durch Verformung des Bereichs 58 die Länge und/oder die Ausrichtung des Anschlussstutzens 46 änderbar ist. Der Bereich 58 des Anschlussstutzens 46 ist faltenbalgartig ausgebildet, mit mehreren aufeinanderfolgenden Falten. Der Anschlussstutzen 46 kann aus Metall oder Kunststoff mit den erforderlichen Eigenschaften hinsichtlich Festigkeit und Zähigkeit zur Ermöglichung der Verformung des Bereichs 58 hergestellt sein.

Der Anschlussstutzen 46 weist in seinem Ausgangszustand eine Länge L1 in seinem außerhalb der Aufnahme 52 liegenden Bereich und eine gerade Ausrichtung auf. Wenn bei der Verwendung der Pumpe bei einer Kraftstoffeinspritzeinrichtung ein Anschließen der Kraftstoffleitung in dieser Länge und Ausrichtung des Anschlussstutzens 46 möglich ist, so kann der Anschlussstutzen 46 in diesem Ausgangszustand bleiben. Wenn ein Anschließen der Kraftstoffleitung an den Anschlussstutzen in dessen Ausgangszustand nicht möglich ist, so kann der Anschlussstutzen 46 durch Verformung des Bereichs 58 in seiner Länge und/oder Ausrichtung angepasst werden. Der Anschlussstutzen 46 wird in seinem Ausgangszustand in der Aufnahme 52 befestigt und anschließend wird die Länge und/oder Ausrichtung des Anschlussstutzens 46 durch Verformung des Bereichs 58 in der erforderlichen Weise angepasst. Gegebenenfalls kann der Anschlussstutzen 46 zur Erleichterung der Verformung zumindest im Bereich 58 erwärmt werden.

In Figur 3 ist der Anschlussstutzen 46 in einem gegenüber dem Ausgangszustand gemäß Figur 2 verformten Zustand dargestellt, wobei hier die Länge L2 durch Dehnung des Bereichs 58 gegenüber der Länge L1 vergrößert ist. Der Anschlussstutzen 46 weist weiterhin wie im Ausgangszustand eine gerade Ausrichtung auf. Alternativ kann die Länge des Anschlussstutzens 46 auch durch Stauchung des Bereichs 58 gegenüber der Länge L1 im Ausgangszustand verringert werden.

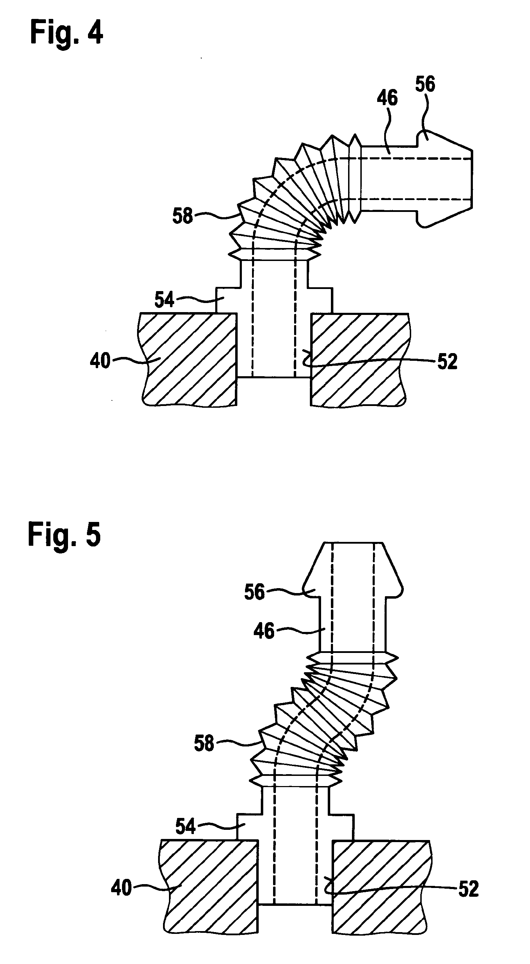

In Figur 4 ist der Anschlussstutzen 46 in einem gegenüber dem Ausgangszustand gemäß Figur 2 verformten Zustand dargestellt, wobei hier der Anschlussstutzen durch Verformung des Bereichs 58 einen gekrümmten Verlauf aufweist. Beispielsweise kann der freie Endbereich des Anschlussstutzens 46 mit der Verdickung 56 etwa rechtwinklig zu dem in der Aufnahme 52 angeordneten Endbereich verlaufen. Es können selbstverständlich auch beliebige andere Winkel zwischen dem freien Endbereich mit der Verdickung 56 und dem in der Aufnahme 52 angeordneten Endbereich beim Anschlussstutzen 46 erreicht werden. Zusätzlich kann der Anschlussstutzen 46 auch durch Stauchung oder Dehnung des Bereichs 58 verkürzt oder verlängert werden.

In Figur 5 ist der Anschlussstutzen 46 in einem gegenüber dem Ausgangszustand gemäß Figur 2 verformten Zustand dargestellt, wobei der Anschlussstutzen 46 durch Verformung des Bereichs 58 einen s-förmig gekrümmten Verlauf aufweist. Beispielsweise kann der freie Endbereich des Anschlussstutzens 46 mit der Verdickung 56 etwa parallel zu dem in der Aufnahme 52 angeordneten Endbereich des Anschlussstutzens 46 verlaufen, jedoch nicht koaxial zu diesem sondern seitlich zu diesem versetzt. Zusätzlich kann der Anschlussstutzen 46 durch Stauchung oder Dehnung des Bereichs 58 verkürzt oder verlängert werden.

## Patentansprüche

1. Pumpe, insbesondere Kraftstoffhochdruckpumpe für eine Kraftstoffeinspritzeinrichtung, mit einem Pumpengehäuse (22,40), wobei am Pumpengehäuse (40) wenigstens ein Anschlussstutzen für eine Zuleitung (48) und/oder eine Rückleitung (50) von Medium zu bzw. von der Pumpe angeordnet ist, wobei der Anschlussstutzen (46) in einer Aufnahme (52) des Pumpengehäuses (40) befestigt ist, **dadurch gekennzeichnet, dass** der wenigstens eine Anschlussstutzen (46) in seiner Längserstreckung zumindest einen Bereich (58) aufweist, der faltenbalgartig ausgebildet und bleibend verformbar ist, um unterschiedliche Längen und/oder Ausrichtungen des Anschlussstutzens (46) zu ermöglichen wenn der Anschlussstutzen (46) in der Aufnahme (52) befestigt ist.

2. Pumpe nach Anspruch 1, **dadurch gekennzeichnet, dass** der wenigstens eine Anschlussstutzen (46) durch Verformung im zumindest einen Bereich (58) in eine gekrümmte Form bringbar ist.

3. Pumpe nach Anspruch 2, **dadurch gekennzeichnet, dass** der freie Endbereich des Anschlussstutzens (46) bezüglich des in der Aufnahme (52) angeordneten Endbereichs des Anschlussstutzens (46) geneigt verläuft.

4. Pumpe nach Anspruch 2, **dadurch gekennzeichnet, dass** der wenigstens eine Anschlussstutzen (46) in eine s-förmig gekrümmte Form bringbar ist, wobei der freie Endbereich des Anschlussstutzens (46) zumindest annähernd parallel zu dem in der Aufnahme (52) angeordneten Endbereich des Anschlussstutzens (46) verläuft.

5. Pumpe nach einem der Ansprüche 1 bis 4, **dadurch gekennzeichnet, dass** die Länge des wenigstens einen Anschlussstutzens (46) durch Stauchung und/oder Dehnung des zumindest einen Bereichs (58) änderbar ist.

6. Pumpe nach einem der vorstehenden Ansprüche, **dadurch gekennzeichnet, dass** der wenigstens eine Anschlussstutzen (46) aus Metall oder Kunststoff hergestellt ist.

## Claims

1. Pump, in particular high-pressure fuel pump for a fuel injection device, having a pump housing (22, 40), wherein, on the pump housing (40), there is arranged at least one connector for a feed line (48) and/or a return line (50) for medium to and/or from the pump, wherein the connector (46) is fastened in a receptacle (52) of the pump housing (40), **characterized in that** the at least one connector (46) has, in its longitudinal extent, at least one region (58) which is of corrugated-bellows-like form and which is permanently deformable in order to make it possible to realize different lengths and/or orientations of the connector (46) when the connector (46) is fastened in the receptacle (52).

2. Pump according to Claim 1, **characterized in that** the at least one connector (46) can be adjusted into a curved shape by way of deformation in at least one region (58).

3. Pump according to Claim 2, **characterized in that** the free end region of the connector (46) runs in an inclined manner relative to that end region of the connector (46) which is arranged in the receptacle (52).

4. Pump according to Claim 2, **characterized in that** the at least one connector (46) can be adjusted into a shape with S-shaped curvature, wherein the free end region of the connector (46) runs at least approximately parallel to that end region of the connector (46) which is arranged in the receptacle (52).

5. Pump according to one of Claims 1 to 4, **characterized in that** the length of the at least one connector (46) can be varied by compressing and/or stretching the at least one region (58).

6. Pump according to one of the preceding claims, **characterized in that** the at least one connector (46) is produced from metal or plastic.

## Revendications

1. Pompe, en particulier pompe à carburant haute pression pour un dispositif d'injection de carburant, comprenant un boîtier de pompe (22, 40), au moins une tubulure de raccordement pour une conduite d'alimentation (48) et/ou une conduite de retour (50) de fluide vers ou depuis la pompe étant disposée au niveau du boîtier de pompe (40), la tubulure de raccordement (46) étant fixée dans un logement (52) du boîtier de pompe (40), **caractérisée en ce que** l'au moins une tubulure de raccordement (46) présente, dans son étendue longitudinale, au moins une région (58) qui est réalisée en forme de soufflet et qui peut être déformée de manière permanente, afin de permettre différentes longueurs et/ou orientations de la tubulure de raccordement (46) lorsque la tubulure de raccordement (46) est fixée dans le logement (52).

2. Pompe selon la revendication 1, **caractérisée en ce que** l'au moins une tubulure de raccordement (46) peut être amenée, par déformation dans au moins une région (58), à adopter une forme courbe.

3. Pompe selon la revendication 2, **caractérisée en ce que** la région d'extrémité libre de la tubulure de raccordement (46) s'étend sous forme inclinée par rapport à la région d'extrémité de la tubulure de raccordement (46) disposée dans le logement (52).

4. Pompe selon la revendication 2, **caractérisée en ce que** l'au moins une tubulure de raccordement (46) peut être amenée à adopter une forme courbe en forme de S, la région d'extrémité libre de la tubulure de raccordement (46) s'étendant au moins approximativement parallèlement à la région d'extrémité de la tubulure de raccordement (46) disposée dans le logement (52).

5. Pompe selon l'une quelconque des revendications 1 à 4, **caractérisée en ce que** la longueur de l'au moins une tubulure de raccordement (46) peut être modifiée par écrasement et/ou étirement de l'au moins une région (58).

6. Pompe selon l'une quelconque des revendications précédentes, **caractérisée en ce que** l'au moins une tubulure de raccordement (46) est fabriquée en métal ou en plastique.
